(19) **Europäisches Patentamt**

**European Patent Office**

**Office européen des brevets**

(11) **EP 0 701 226 B1**

(12) **EUROPEAN PATENT SPECIFICATION**

(45) Date of publication and mention
of the grant of the patent:
**21.03.2001 Bulletin 2001/12**

(51) Int Cl.⁷: **G06K 9/34**, G06K 9/32

(21) Application number: **95306118.1**

(22) Date of filing: **01.09.1995**

(54) **Method for segmenting handwritten lines of text in a scanned image**

Verfahren zur Segmentierung handgeschriebener Linien auf einem abgetasten Bild

Méthode pour segmenter des lignes de texte manuscriptes sur une image scannée

(84) Designated Contracting States:
**DE FR GB**

(30) Priority: **09.09.1994 US 303962**

(43) Date of publication of application:
**13.03.1996 Bulletin 1996/11**

(73) Proprietor: **XEROX CORPORATION**
**Rochester, New York 14644 (US)**

(72) Inventor: **Saund, Eric**
**San Carlos, California 94070 (US)**

(74) Representative:
**Skone James, Robert Edmund et al**
**GILL JENNINGS & EVERY**
**Broadgate House**
**7 Eldon Street**
**London EC2M 7LH (GB)**

(56) References cited:
**EP-A- 0 332 471**          **GB-A- 2 230 633**

## Description

The present invention relates to image analysis techniques for segmenting textual areas in images. More specifically, the invention relates to isolating strokes, or tokens, which make up characters in a particular text line.

In collaborative working environments, several users frequently wish to view and manipulate displayed information simultaneously. Whiteboards and Blackboards (hereafter referred to as "Boards") are widely used to maintain hand drawn textual and graphic images on a "wall-size" surface. The Board medium offers certain properties that facilitate a variety of interactive work practices:

> markings are large enough to be viewed by several people;
> markings can be edited by erasing and redrawing; the surface is immobile, so does not get lost, crumpled, torn, or blown by wind; the surface is readily erased, is completely reusable, and (practically) does not wear out.

However, one drawback to using a Board is that information is not easily transferred to other media. Thus, it is not currently possible to hold a conversation with someone while maintaining a record of the conversation in text and graphics on a Board and then quickly, easily, and automatically transfer the record to paper or other portable and storable medium.

Existing methods for accomplishing this task are cumbersome, time-consuming, and inconvenient. One can simply transcribe by hand, onto paper, any or all of the text and graphics residing on the Board. This can be time-consuming, and suffers from errors due to mistakes in human reading and writing. Or, one can photograph the Board with a camera. This requires having a camera at hand, introduces the delay of developing the film, can be expensive if an "instant" camera is used, and is subject to poor quality rendition due to improper focus and exposure.

A camera further usually produces an image of greatly reduced size that can be difficult to read.

Alternatively, "wall-size" sheets of paper, such as poster pads, lead to relatively permanent and portable record of what was written, but these sheets of paper are large and cumbersome, and do not permit erasure during image creation.

A copy-board device provides a writing surface which can be transcribed into paper hardcopy, but these are currently conceived as conspicuous portable whiteboards that displace rather than leverage existing, built-in Boards.

GB-2230633 describes a method of optical character recognition in which lines of characters in a recognition area are determined. The problem addressed is that of determining lines of characters from characters which are typed out in parallel lines, where the lines of characters are interrupted by a longitudinal ruled line or a picture element, such as often occurs in newspapers and magazines. In other words, the goal is to make sure that characters on either side of a non-textual element are aligned correctly.

To address this problem, the invention described in GB-2230633 uses the concept of "fundamental lines." Since the characters are typed out along parallel lines, they inherently form fundamental lines. Thus, each character belongs to some fundamental line, so characters separated by a graphical element can be correctly aligned by matching their fundamental lines.

To perform this analysis, a character rectangle is formed around each character. Then, the rectangles are checked to judge whether or not two adjacent character rectangles are connected to each other. After joining all adjacent character rectangles into lines, fundamental lines are determined. Finally, after a fundamental line is determined for each line of connected character rectangles, unconnected character rectangles having the same fundamental lines are connected together as part of the same line of character rectangles.

The techniques discussed above further do not aid in transferring the image from the Board into an electronically usable form.

concurrently filed application EP-A-0701225, corresponding to U.S. Patent Application Serial No. 08/303,918 provides specific technical details for a device to transcribe marks on a Board into electronic form. In summary, a video camera is mounted on a pan/tilt head.

High resolution tiles are obtained by zooming in the camera on patches of the image. These are later pieced together to form a full size high resolution composite image. Perspective distortion, effects of uneven lighting, and tile overlap are handled by image processing operations.

Such a transcription device is useful because an electronic version of a Board image provides variety and flexibility in the further use of the image data. For example, an electronic image can be hardcopied, transmitted by fax, stored to a file, transferred to an electronic workstation, or projected onto a screen. Moreover, prior to any of these operations the image itself may be processed, for example select out just a region of the image, to select just certain colors, to enhance or rectify the line work, to reorder items in a list, and so forth.

The wealth of operations made available by the fundamental ability to transcribe a Board image raises the issue of control: how is the user to specify operations to be done, and when? Concurrently filed application EP-A-0701224, corresponding to U.S. Patent Application Serial No. 08/303,929, provides specific technical details for seamless creation, capture, and electronically mediated use of images originating on a whiteboard. The user interface is to consist of marks drawn by the user on the Board itself. For example, in the simplest case the user might draw a special "button" symbol, and then draw a check mark inside when the button is to be "pressed." Enhanced functionality may be achieved by annotating the button symbol with further directives.

The previously described interface does not eliminate the need for users to possess knowledge of how to communicate with the system in this diagrammatic fashion, but this knowledge may be more accessible and more easily assimilated by many Board users than any control panel or computer console based interface.

A diagrammatic interface exploits the user's existing skills in drawing on the Board, and furthermore can offer extremely simple access to basic functionality and introduce incrementally the greater diagrammatic complexity required to fine tune greater functionality. Finally, a diagrammatic interface consisting of marks drawn on the Board itself is best suited to providing spatial control directives, such as to extract a region of the image.

A diagrammatic user interface to a Board transcription system hinges on the ability of a computer program to successfully interpret marks on the Board.

The present invention describes a novel application of computer vision techniques supporting segmentation of hand drawn text at the word and line level. The present invention does not perform handwritten text recognition, but the text segmented out may be extracted as bitmaps and passed to auxiliary recognition modules. The techniques offered herein further lead to a greater degree of robustness in the machine interpretation of hand drawn diagrams than has previously been demonstrated in the art.

In accordance with the present invention, we provide a method for segmenting textual areas in a scanned image into lines of text according to claim 1, and a method for segmenting a scanned surface into a symbolic annotation region according to claim 4.

The invention further provides a programmable image processing apparatus when suitably programmed for carrying out the method of any of the appended claims or any of the particular embodiments described herein.

One object of this invention is to isolate text lines in a scanned image. These text lines are formed of images which may be drawn at any location on the Board, at any time, and provide a method for selecting control operations from the Board.

Embodiments of the invention will now be described, by way of example, with reference to the accompanying drawings, in which

Fig. 1 shows a general surface scanning system;
Fig. 2 is a flowchart which shows a general method for producing a binary rendition of a Board from a set of scanned image sections;
Fig. 3 shows a complex hand drawn command structure including lines leading to symbolic textual annotations;
Fig. 4 shows an image with a selected region including hand written text lines;
Fig. 5 presents an overall functional architecture supporting the present invention;
Fig. 6 is a flowchart which shows the steps used to identify basic curve fragments;
Fig. 7 shows a simple command structure with associated text;
Fig. 8 is a flowchart which provides the steps of text segmentation based on adaptive agglomerative token clustering; and
Fig. 9 shows the estimation of line variance and position.

## General System Description

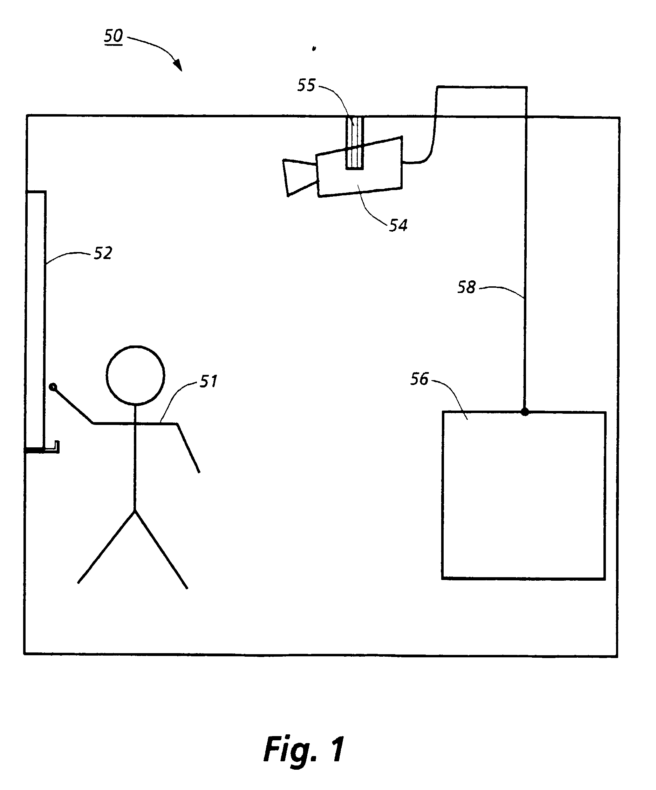

Fig. 1 shows a general Board scanning system 50 in which the techniques of the present invention may be employed. It will be clear that the techniques herein described may further be applied to other types of systems, as well. For example, the techniques described may be used to interpret control commands via marks on paper in a paper-based user interface. The techniques may also be used as command entry interface for pen-based computing systems. The discussion herein, however, will be primarily described in terms of the Board scanning system described below.

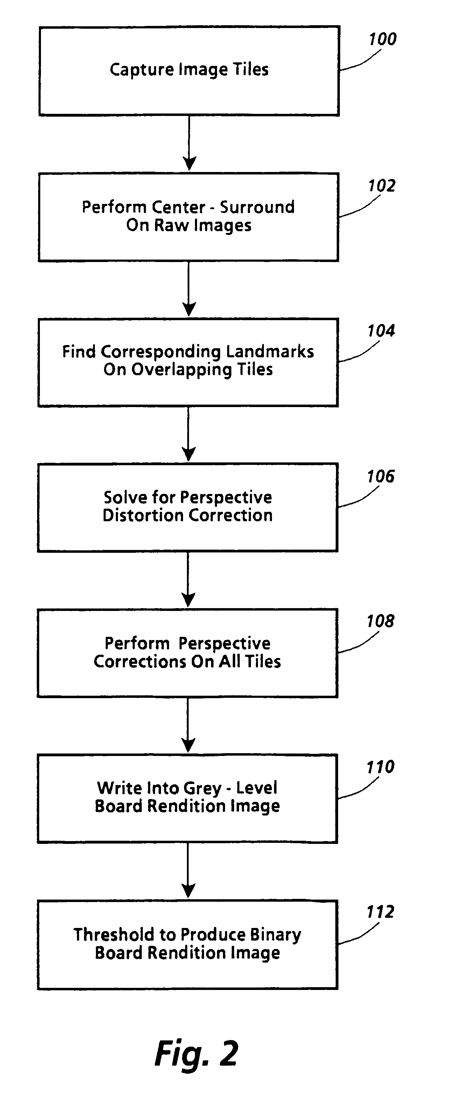

More detail describing the features and operation of the system in Fig. 1 and 2 may be found in coconcurrently filed application EP-A-0701225, corresponding to U.S. Patent Application Serial No. 08/303,918.

A board 52 accepts markings from a user 51. Camera subsystem 54 captures an image or images of the Board, which are fed to computer 56 via a network 58. In general, the resolution of an electronic camera such as a video camera will be insufficient to capture an entire Board image with enough detail to discern the markings on the Board clearly. Therefore, several zoomed-in images of smaller subregions of the Board, called "image tiles," must be captured independently, and then pieced together.

Camera subsystem 54 is mounted on a computer-controlled pan/tilt head 55, and directed sequentially at various subregions, under program control, when an image capture command is executed. Camera subsystem 54 may alternately comprise an array of fixed cameras, each directed at a different subregion or subregions. For the discussion herein, camera subsystem 54 may be referred to as simply camera 54.

The "raw" image tiles will in general overlap one another, contain perspective distortion due to the off-axis viewpoint of the camera, and contain uneven lightness levels across the board between foreground (written marks) and background (unmarked board) due to uncontrolled lighting conditions and reflections. The flowchart of Fig. 2 shows a general method for producing a binary rendition of the Board from a set of scanned image sections, including compensation for the above described effects. In step 100, the scanned image sections are captured as "tiles." Each tile is a portion of the Board image scanned by a camera, such as camera 54. A Board is captured as a series of tiles. The tiles slightly overlap with neighboring tiles, so that the entire image is scanned with no "missing" spaces. The location of each tile is known from the position and direction of the camera on the pan/tilt head when the tile is scanned. The tiles may be described as "raw image" or "camera image" tiles, in that no processing has been done on them to either interpret or precisely locate them in the digital image. In step 102 center-surround processing is performed on each camera image tile. Center-surround processing compensates for the lightness variations among and within tiles.

Step 104 finds corresponding "landmarks" in overlapping tiles. "Landmarks" are described as marks on the Board which may be used to provide the correct orientation and overlap position of neighboring tiles. Landmarks that appear in a region of overlap between two tiles will be used to "match up" those two tiles to reconstruct the image.

Step 106 solves for perspective distortion corrections that optimize global landmark mismatch functions. This step corrects for errors that occur in the dead reckoning of the tile location in the image. The transformation is weighted by a confidence in the location of each landmark, which is obtained in the previous step. Step 108 performs perspective corrections on all the tiles using the perspective transformation determined in step 106.

In step 110, the corrected data for all the tiles is written into a grey-level Board rendition image. In step 112, this grey-level image is thresholded, producing a binary, electronically manipulable rendition of the Board image.

In the discussion hereinafter, the actual steps of converting a Board image to a digital image will be assumed to be implemented as previously described.

## General Features and Architectural Overview

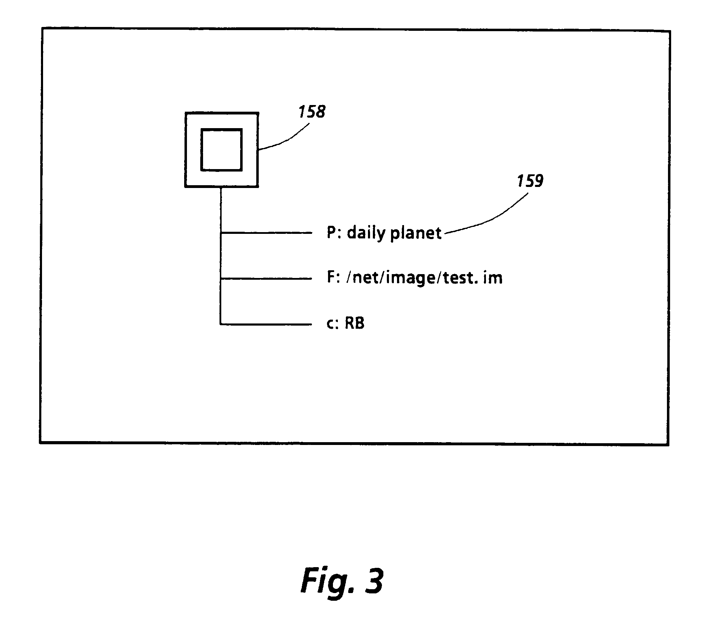

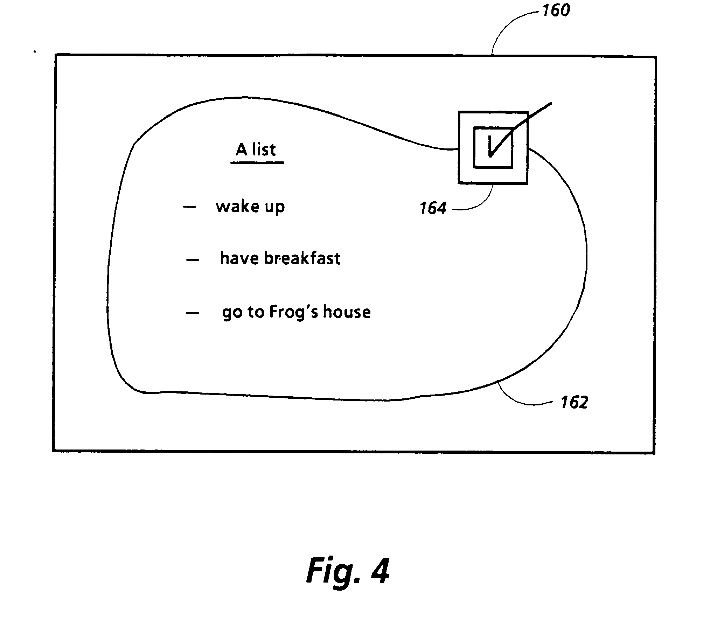

Figures 3 and 4 illustrate applications of the present invention. More detail concerning the command features described herein may be found in previously referenced EP-A-0701224, corresponding to U.S. Patent Application Serial No. 08/303,929.

Figure 3 shows a board image 150, including a hand drawn button consisting of two "nested" squares--one square immediately inside the other. This is referred to as a NESTED-BOX-BUTTON, or NBB 158. Drawing an "x" or a checkmark in the button "selects" the button. NBB 158 shows lines leading to symbolic textual annotations directing that hardcopy be sent to a printer "daily planet," that an image file be stored called "test.im," and that only red and blue colors be transcribed.

Figure 4 shows an image 160, from "A list" in "Frog and Toad Together," by Arnold Lobel, ©1972, HarperCollins Publishers. Image 160 has a region 162, selected by NBB 164, which includes lines of text.

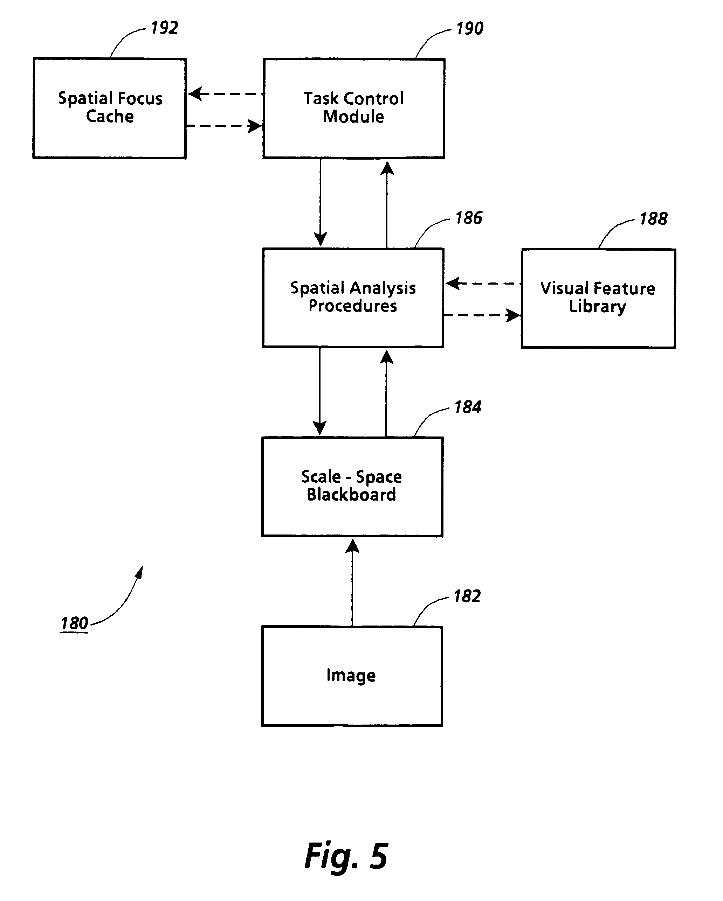

Figure 5 presents an overall functional architecture 180 supporting the present invention. Information about the content of image 182 is maintained as symbolic tokens residing in the Scale-Space blackboard (SSB) data structure 184. These symbolic tokens serve as a resource for spatial analysis procedures 186, which may at times contribute new tokens to the Board data structure. At the top level, task control module 190 directs spatial analysis procedures 186 to collect information about image 182 in order to build descriptions of the aspects of the image that are relevant to the immediate task.

The Scale-Space blackboard data structure 184 facilitates spatial and geometric computations by providing indexing of symbolic tokens on the basis of spatial location and scale. These tokens are compact symbolic descriptors of abstract image events such as the occurrence of curves, corners, nested boxes, characters, etc. The SSB data structure 184 is further described in Saund, E., "Symbolic Construction of a 2-D Scale Space Image," IEEE TPAMI, V. 12 No. 8, August 1990. For convenience, in practice several SSB data structures may be maintained, each holding different kinds of information reflecting different stages of processing.

A large and extensible visual feature library 188 is maintained in connection with spatial analysis procedures 186, with a knowledge base of prototypical spatial events which can be labeled explicitly by placing new tokens on the SSB. These spatial analysis procedures underlie the major image analysis tasks of recognizing command symbols, tracing curvilinear paths, and segmenting lines of handwritten text.

The top level task control module 190 directs the application of spatial analysis procedures 186 according to a task execution strategy defined for the specific diagrammatic user interface specification. Associated with task control module 190 is a temporary store, spatial focus cache 192, which maintains state as to what button boxes or other task level objects are believed to be in the image, as well as information about locations of the image requiring examination in detail as processing resources become available.

## Processing Techniques

The following description and figures describes image processing techniques that may be used to identify tokens, trace curves and corners, and segment handwritten text lines to implement the techniques of task control as described above.

### i. Basic Curvilinear Processing

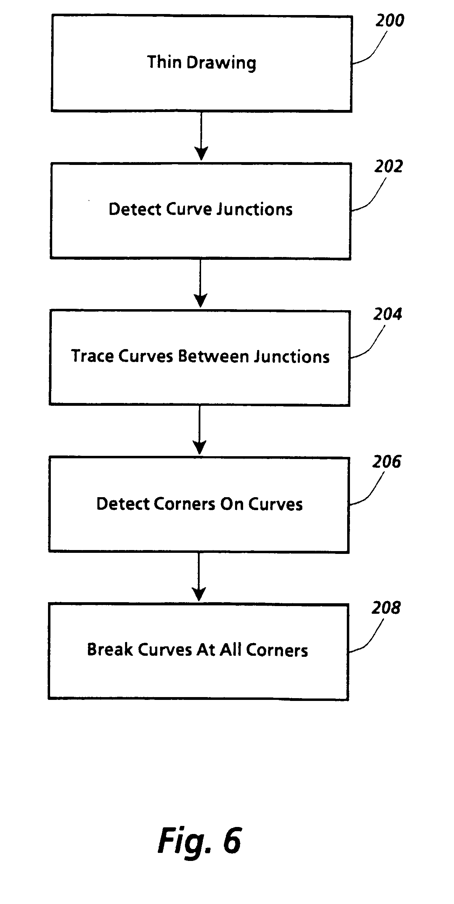

The most primitive type of token is called a PRIMITIVE-CURVE-FRAGMENT, representing relatively straight sections of curves having no internal junctions or crossings with other curves. The steps shown in Fig. 6 are used to identify curve fragments.

Step 200 first thins the lines of the drawing using morphological erosion, a technique well-known to practitioners of computer vision. Step 202 detects curve junctions using a morphological hit-miss transform with masks that reflect junction configurations of 3x3 pixels.

Step 204 traces curves between junctions, using any one of many curve tracing methods well known in computer vision literature. Step 206 detects corners on curves. Techniques for doing this are also available in computer vision literature.

Step 208 breaks curves at corners, leaving elementary fragments to be labeled as PRIMITIVE-CURVE-FRAGMENT type tokens, which are written onto the SSB data structure. These processing steps are further described in copending, coassigned patent application Serial No. 101,646 "Method for Dynamically Maintaining Multiple Structural Interpretations in Graphics Systems," to Saund, et al. herein incorporated by reference.

### ii. Segmenting handwritten text

The use of handwritten text in a diagrammatic user interface entails two image analysis subproblems. First, the relevant text directives must be identified and segmented from other markings on the board, and second, the text must be recognized. The present invention offers means for solving the first of these subproblems.

A combination of command symbols and curvilinear line tracing leads to the identification of locations in the image which are the beginning of a line of text. Then, text segmentation demarcates the region of the image containing the text. This can be difficult when ascenders and descenders extend into lines above and below the current line, and when the text drifts in height so that text lines cannot be clearly separated by horizontal lines.

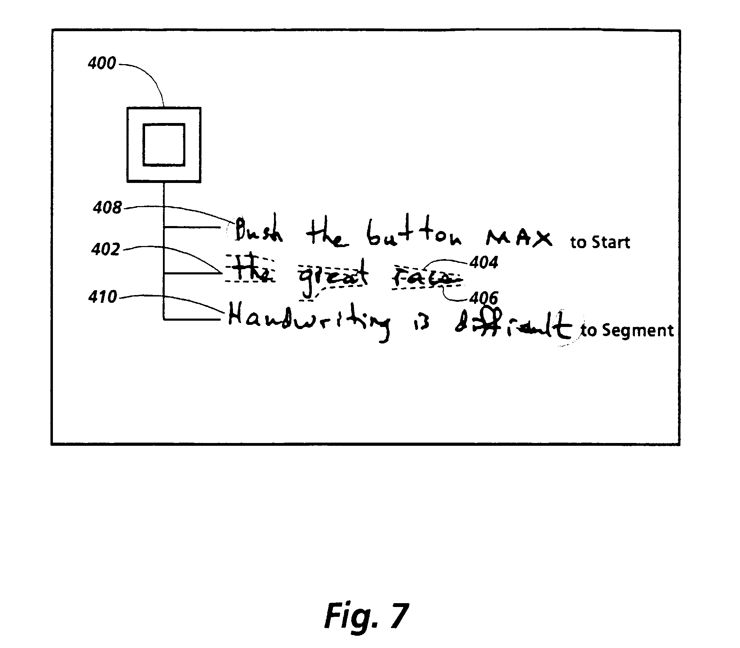

This technique may be illustrated as shown in Fig. 7. Fig. 7 shows a simple command structure associated with a NBB 400. Various methods of tracing may be used to identify point 402, where text is expected. Starting from point 402, an agglomerative clustering of tokens forming a text line may be performed. Text segmentation is based on accumulating tokens along a text line, left to right, accepting only those tokens whose vertical position and vertical extent are approximately matched to the current estimate of the vertical position and vertical extent of the line.

Error bars 404 and 406 show an estimate of the current height of the line. This current height is used as a parameter for deciding if the next character should be accepted or not. This aids in the acceptance of lines in which the writing may be smaller or larger as the line progresses. For example, the text at line 408 becomes smaller as it approaches the border of the image. The technique of the present invention keeps track of where the line is and how big it is at each point along its distance. Each character is compared with the immediately preceding character, rather than estimating a first character and comparing the rest of the line with that first character, as is done in previous systems. It also allows the segmentation to follow text as it tends to drift, as in line 410 for example, another common problem in handwritten images.

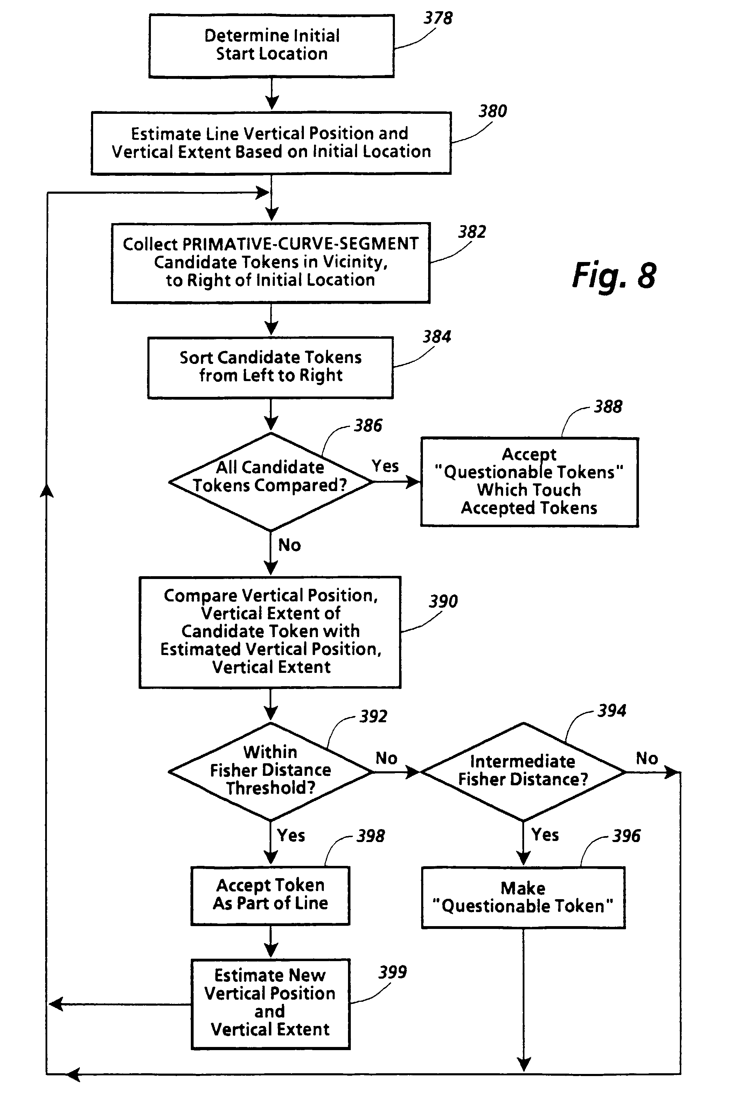

The flowchart of Fig. 8 provides the steps of text segmentation based on adaptive agglomerative token clustering. Step 378 requires a determination of an initial starting location of the text line area. this may be determined by a number of methods, including via the steps in EP-A-0701224, corresponding to U.S. Patent Application 08/303,929, previously referenced.

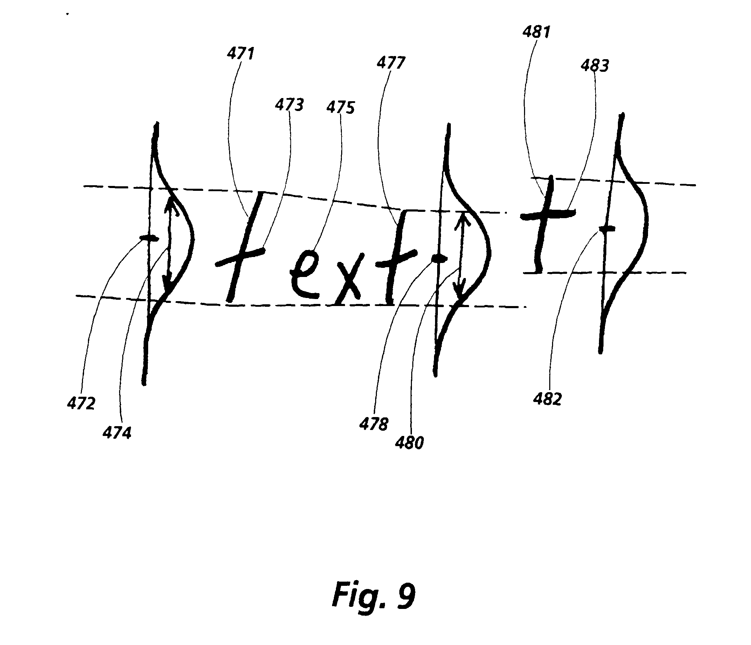

In step 380, an initial estimate of line vertical position and vertical extent is formed, based on the initial location. These will be determined as a gaussian distribution whose mean is vertical position and whose variance is vertical extent. For example, in Fig. 9 initial token 471 has a mean 472 and variance 474.

Step 382 collects PRIMITIVE-CURVE-FRAGMENT tokens in the vicinity and to the right of the initial horizontal position. These are sorted from left to right in step 384, and are called "candidate" tokens. For each candidate token in step 386, the vertical location and vertical extent of each candidate token is compared with the current estimated line vertical position and vertical extent in step 390.

If the token falls within a threshold vertical position at step 392, this token is accepted as part of the line in step 398, and the line estimated vertical position and vertical extent is updated by the well-known formula for combining gaussian means and variances in step 399. As seen in Fig. 9, the addition of token 477 gives an updated mean, or vertical distance, 478, and a vertical extent 480.

A vertical threshold distance may be determined according to a Fisher linear discriminant distance measure as described in "Pattern Classification and Scene Analysis" by Richard Duda and Peter Hart, [©] 1973, by John Wiley & Sons, Inc., pages 114-118. The "Fisher distance" describes the level of similarity between two Gaussian distributions. To test a new token to see if it should be grouped with the existing line, the distance is

$$D \simeq \frac{|m_l - m_s|}{SQRT\left(\frac{n_l v_l + n_s v_s}{n_l + n_s}\right)}$$

calculated, where $m_l$ and $v_l$ are the mean and variance parameters of the existing line as described above,

$$m_s = \frac{\left(t_s + b_s\right)}{2} \quad and \quad v_s = t_s - b_s ,$$

where $t_s$ and $b_s$ are the vertical positions of the top and bottom extent of the stroke being considered. $n_l$ and $n_s$ are weighting factors for the existing line and new stroke, respectively. The existing line is given more weight than the new stroke. For example, to give the existing line 10 times more weight than the new stroke, a 10:1 ratio, or $n_l = 10.0$, $n_s = 1.0$ is used.

Candidate tokens not within the Fisher distance threshold at step 392, but falling at an intermediate Fisher distance with respect to the current line position at step 394, are kept in a separate list of "questionable tokens" in step 396. When all candidate tokens have been processed at step 386, those questionable tokens that touch a previously accepted candidate token are accepted at step 388. For example, in Fig. 9 token 481 has a vertical mean 482 not far outside the vertical extent 480, and so should be accepted. Token 483 is mostly outside the previous distribution, and may be considered questionable. However, token 483 touches an accepted token 481, and so would also be accepted.

The effect of this technique is to collect tokens along a text line, left to right, dynamically updating the estimated line vertical position and line height along the way. From these tokens it is an easy matter to extract the corresponding region of the original bitmap image to send to a separate handwriting recognition module for recognition of the text.

**Claims**

1. A method for segmenting handwritten textual areas in a scanned image into lines of text, comprising:

   (a) detecting a first token (471) representing a character portion,

   (b) determining from said first token (471) a current line height (474) and position (472);

   (c) detecting a next token (477) representing a character portion;

   (d) determining a next token height and position;

   when said next token position is sufficiently similar to said current line position, accepting said next token (477) as a line character;

   (e) determining a new current line height (480) and position (478) based on the current line height and position and the height and position of the accepted line character; and

   (f) repeating steps (c) to (e) for at least one further token.

2. The method of claim 1, wherein steps (c) to (e) are repeated for all tokens in a vicinity of said first token (471).

3. The method of claim 2, wherein for each token (483) in which said token position is not sufficiently similar to said current line position but is within an intermediate range of said current line position, said token (483) is accepted as a line character if said second token (483) is touching another accepted token (481).

4. A method for segmenting a scanned surface into a symbolic annotation region comprising :

   (a) determining a starting point of the symbolic annotation region;
   (b) determining candidate tokens in proximity of said symbolic annotation region starting point;
   (c) determining a first token (471) to the right of said starting point;
   (d) defining a current gaussian distribution of said first token (471), in which the variance (474) of said current gaussian distribution represents a current average height of said symbolic annotation region and the mean (472) represents a current vertical position of said symbolic annotation region; and
   (e) for all remaining candidate tokens:

      (e1) determining the next rightward candidate token (473) ;
      (e2) defining a gaussian distribution of said next candidate token (473), including calculating a mean; and

   when said mean of said gaussian distribution of said next candidate token (473) is within a threshold variance of said mean of said current gaussian distribution accepting said next candidate token as part of said symbolic annotation region and combining said gaussian distribution of said next candidate token with said current gaussian distribution to calculate a new current gaussian distribution of said symbolic annotation region.

5. The method of claim 4, wherein for each candidate token in which said mean of said gaussian distribution of said next candidate token is not within the threshold variation of said mean of said current gaussian distribution but is within an intermediate threshold range of said mean of said current gaussian distribution, said candidate token is accepted as part of said symbolic annotation region if the candidate token is touching an accepted token, and said gaussian distribution of said next candidate token is combined with said current gaussian distribution to calculate a new current gaussian distribution of said symbolic annotation region.

6. A programmable image processing apparatus for segmenting handwritten textual areas in a scanned image into lines of text, the apparatus comprising a detector (54) coupled to a processor, the apparatus being adapted to :

   (a) detect a first token (471) representing a character portion,
   (b) determine from said first token (471) a current line height (474) and position (472);
   (c) detect a next token (477) representing a character portion;
   (d) determine a next token height and position; when said next token position is sufficiently similar to said current line position, accepting said next token (477) as a line character;
   (e) determine a new current line height (480) and position (478) based on the current line height and position and the height and position of the accepted line character; and, (f) repeating steps (c) to (e) for at least one further token (f) repeating steps (c) to (e) for at least one further token

7. A programmable image processing apparatus for segmenting a scanned surface into a symbolic annotation region, the apparatus comprising a detector (54) coupled to a processor (56), the apparatus being adapted to:

   (a) determine a starting point of the symbolic annotation region;
   (b) determine candidate tokens in proximity of said symbolic annotation region starting point;
   (c) determine a first token (471) to the right of said starting point;
   (d) define a current gaussian distribution of said first token (471), in which the variance (474) of said current gaussian distribution represents a current average height of said symbolic annotation region and the mean (472) represents a current vertical position of said symbolic annotation region; and
   (e) for all remaining candidate tokens:

      (e1) determine the next rightward candidate token (473) ;
      (e2) define a gaussian distribution of said next candidate token (473), including calculating a mean; and

   when said mean of said gaussian distribution of said next candidate token (473) is within a threshold variance of said mean of said current gaussian distribution accepting said next candidate token as part of said symbolic annotation region and combine said gaussian distribution of said next candidate token with said current gaussian distribution to calculate a new current gaussian distribution of said symbolic annotation region.

**Patentansprüche**

1. Verfahren zum Segmentieren von handgeschriebenen, textmäßigen Bereichen in einem abgetasteten Bild in Textzeilen, das aufweist:

   (a) Erfassen eines ersten Token (471), der einen Zeichenbereich darstellt,
   (b) Bestimmen aus dem ersten Token (471) einer momentanen Zeilenhöhe (474) und -position (472);
   (c) Erfassen eines nächsten Token (477), der einen Zeichenbereich darstellt;
   (d) Bestimmen einer nächsten Tokenhöhe und -position; wenn die nächste Tokenposition ausreichend ähnlich zu der momentanen Zeilenposition ist, Akzeptieren des nächsten Token (477) als ein Zeilen-Zeichen;
   (e) Bestimmen einer neuen, momentanen Zeilenhöhe (480) und -position (478) basierend auf der momentanen Zeilenhöhe und -position und der Höhe und Position des akzeptierten Zeilen-Zeichens, und
   (f) Wiederholen der Schritte c) bis e) für mindestens einen weiteren Token.

2. Verfahren nach Anspruch 1, wobei die Schritte c) bis f) für alle Token in einer Nähe des ersten Token (471) wiederholt werden.

3. Verfahren nach Anspruch 2, wobei für jeden Token (483), bei dem die Tokenposition nicht ausreichend ähnlich zu der momentanen Zeilenposition ist, allerdings innerhalb eines Zwischenbereichs der momentanen Zeilenposition liegt, der Token (483) als ein Zeilen-Zeichen akzeptiert wird, wenn der zweite Token (483) einen anderen, akzeptierten Token (481) berührt.

4. Verfahren zum Segmentieren einer abgetasteten Oberfläche in einen symbolischen Annotationsbereich, das aufweist:

> (a) Bestimmen eines Startpunkts des symbolischen Annotationsbereichs;
> (b) Bestimmen von Kandidaten-Token in der Nähe des symbolischen Annotationsbereich-Startpunkts;
> (c) Bestimmen eines ersten Token (471) rechts von dem Startpunkt;
> (d) Definieren einer momentanen Gauß'schen Verteilung des ersten Token (471), wobei die Varianz (474) der momentanen Gauß'schen Verteilung eine momentane, durchschnittliche Höhe des symbolischen Annotationsbereichs darstellt und das Mittel (472) eine momentane, vertikale Position des symbolischen Annotationsbereichs darstellt; und
> (e) für alle verbleibenden Kandidaten-Token:
>
>> (e1) Bestimmen des nächsten, rechts liegenden Kandidaten-Token (473);
>> (e2) Definieren einer Gauß'schen Verteilung des nächsten Kandidaten-Token (473), umfassend eine Berechnung eines Mittels; und
>
> wenn das Mittel der Gauß'schen Verteilung des nächsten Kandidaten-Token (473) innerhalb einer Schwellwertvarianz des Mittels der momentanen Gauß'schen Verteilung liegt, Akzeptieren des nächsten Kandidaten-Token als Teil des symbolischen Annotationsbereichs und Kombinieren der Gauß'schen Verteilung des nächsten Kandidaten-Token mit der momentanen Gauß'schen Verteilung, um eine neue, momentane Gauß'sche Verteilung des symbolischen Annotationsbereichs zu berechnen.

5. Verfahren nach Anspruch 4, wobei für jeden Kandidaten-Token, bei dem das Mittel der Gauß'schen Verteilung des nächsten Kandidaten-Token nicht innerhalb der Schwellwertvariation des Mittels der momentanen Gauß'schen Verteilung liegt, sondern innerhalb eines Zwischenschwellwertbereichs des Mittels der momentanen Gauß'schen Verteilung liegt, der Kandidaten-Token als Teil des symbolischen Annotationsbereichs akzeptiert wird, wenn der Kandidaten-Token einen akzeptierten Token berührt, und daß die Gauß'sche Verteilung des nächsten Kandidaten-Token mit der momentanen Gauß'schen Verteilung kombiniert wird, um eine neue momentane Gauß'sche Verteilung des symbolischen Annotationsbereichs zu berechnen.

6. Programmierbare Bildverarbeitungsvorrichtung zum Segmentieren handgeschriebener Textbereiche in einem abgetasteten Bild in Textzeilen, wobei die Vorrichtung einen Detektor (54) aufweist, der mit einem Prozessor verbunden ist, wobei die Vorrichtung angepaßt ist, um:

> (a) einen ersten Token (471), der einen Zeichenbereich darstellt, zu erfassen;
> (b) aus dem ersten Token (471) eine momentane Zeilenhöhe (474) und -position (472) zu bestimmen;
> (c) einen nächsten Token (477), der einen Zeichenbereich bestimmt, zu erfassen;
> (d) eine nächste Tokenhöhe und -position zu bestimmen;
> wenn die nächste Tokenposition ausreichend ähnlich zu der momentanen Zeilenposition ist, Akzeptieren des nächsten Token (477) als ein Zeilen-Zeichen;
> e) eine neue momentane Zeilenhöhe (480) und -position (478) basierend auf der momentanen Zeilenhöhe und -position und der Höhe und Position des akzeptierten Zeilen-Zeichens zu bestimmen; und
> f) die Schritte c) bis e) für mindestens einen weiteren Token zu wiederholen.

7. Programmierbare Bildverarbeitungsvorrichtung zum Segmentieren einer abgetasteten Oberfläche in einen symbolischen Annotationsbereich, wobei die Vorrichtung einen Detektor (54) aufweist, der mit einem Prozessor (56) verbunden ist, wobei die Vorrichtung angepaßt ist, um:

> (a) einen Startpunkt des symbolischen Annotationsbereichs zu bestimmen;
> (b) Kandidaten-Token in der Nähe des symbolischen Annotationsbereich-Startpunkts zu bestimmen;
> (c) einen ersten Token (471) rechts von dem Startpunkt zu bestimmen;
> (d) eine momentane Gauß'sche Verteilung des ersten Token (471) zu bestimmen, wobei die Varianz (474) der momentanen Gauß'schen Verteilung eine momentane, durchschnittliche Höhe des symbolischen Annotationsbereichs darstellt und das Mittel (472) eine momentane, vertikale Position des symbolischen Annotationsbereichs darstellt; und
> (e) für alle verbleibenden Kandidaten-Token:
>
>> (e1) den nächsten, rechts liegenden Kandidaten-Token (473) zu bestimmen;

(e2) eine Gauß'sche Verteilung des nächsten Kandidaten-Token (473) zu definieren, umfassend eine Berechnung eines Mittels; und

wenn das Mittel der Gauß'schen Verteilung des nächsten Kandidaten-Token (473) innerhalb einer Schwellwertvarianz des Mittels der momentanen Gauß'schen Verteilung liegt, Akzeptieren des nächsten Kandidaten-Token als Teil des symbolischen Annotationsbereichs und Kombinieren der Gauß'schen Verteilung des nächsten Kandidaten-Token mit der momentanen Gauß'schen Verteilung, um eine neue, momentane Gauß'sche Verteilung des symbolischen Annotationsbereichs zu berechnen.

**Revendications**

1. Procédé destiné à segmenter en lignes de texte des zones de texte manuscrit d'une image numérisée, comprenant les étapes consistant à :

   (a) détecter un premier jeton (471) représentant une partie de caractère,
   (b) déterminer à partir dudit premier jeton (471) une hauteur de ligne en cours (474) et une position (472),
   (c) détecter un jeton suivant (477) représentant une partie de caractère,
   (d) déterminer une hauteur et une position du jeton suivant, lorsque ladite position du jeton suivant est suffisamment similaire à ladite position de ligne en cours, accepter ledit jeton suivant (477) comme un caractère de la ligne,
   (e) déterminer une hauteur (480) et une position (478) d'une nouvelle ligne en cours sur la base de la hauteur et de la position de la ligne en cours et de la hauteur et de la position du caractère de ligne accepté, et
   (f) répéter les étapes (c) à (e) pour au moins un autre jeton.

2. Procédé selon la revendication 1, dans lequel les étapes (c) à (e) sont répétées pour tous les jetons à proximité dudit premier jeton (471).

3. Procédé selon la revendication 2, dans lequel pour chaque jeton (483) dans lequel ladite position de jeton n'est pas suffisamment similaire à ladite position de ligne en cours mais est à l'intérieur d'une plage intermédiaire de ladite position de ligne en cours, ledit jeton (483) est accepté comme caractère de la ligne si ledit second jeton (483) touche un autre jeton accepté (481).

4. Procédé destiné à segmenter une surface numérisée en une région d'annotations symboliques comprenant les étapes consistant à :

   (a) déterminer un point de départ de la région d'annotations symboliques,
   (b) déterminer des jetons candidats à proximité dudit point de départ de la région d'annotations symboliques,
   (c) déterminer un premier jeton (471) à la droite dudit point de départ,
   (d) définir une distribution gaussienne en cours dudit premier jeton (471), dans laquelle la variance (474) de ladite distribution gaussienne en cours représente une hauteur moyenne en cours de ladite région d'annotations symboliques et la moyenne (472) représente une position verticale en cours de ladite région d'annotations symboliques, et
   (e) pour tous les jetons candidats restants :

      (e1) déterminer le jeton candidat de droite suivant (473),
      (e2) définir une distribution gaussienne dudit jeton candidat suivant (473), comprenant le calcul d'une moyenne, et

   lorsque ladite moyenne de ladite distribution gaussienne dudit jeton candidat suivant (473) est en dessous d'une variance de seuil de ladite moyenne de ladite distribution gaussienne en cours, accepter ledit jeton candidat suivant comme faisant partie de ladite région d'annotations symboliques et combiner ladite distribution gaussienne dudit jeton candidat suivant à ladite distribution gaussienne en cours afin de calculer une nouvelle distribution gaussienne en cours de ladite région d'annotations symboliques.

5. Procédé selon la revendication 4, dans lequel, pour chaque jeton candidat dans lequel ladite moyenne de ladite distribution gaussienne dudit jeton candidat suivant n'est pas à l'intérieur de la variation de seuil de ladite moyenne de ladite distribution gaussienne en cours mais est à l'intérieur d'une plage de seuil intermédiaire de ladite moyenne de ladite distribution gaussienne en cours, ledit jeton candidat est accepté comme faisant partie de ladite région d'annotations symboliques si le jeton candidat touche un jeton accepté, et ladite distribution gaussienne dudit jeton candidat suivant est combinée à ladite distribution gaussienne en cours afin de calculer une nouvelle distribution gaussienne en cours de ladite région d'annotations symboliques.

6. Dispositif de traitement d'image programmable destiné à segmenter en lignes de texte des zones de texte manuscrit dans une image numérisée, le dispositif comprenant un détecteur (54) relié à un processeur, le dispositif étant conçu pour :

(a) détecter un premier jeton (471) représentant une partie de caractère,

(b) déterminer à partir dudit premier jeton (471) une hauteur (474) et une position (472) de ligne en cours,

(c) détecter un jeton suivant (477) représentant une partie de caractère,

(d) déterminer une hauteur et une position du jeton suivant, lorsque ladite position du jeton suivant est suffisamment similaire à ladite position de ligne en cours, accepter ledit jeton suivant (477) comme un caractère de la ligne,

(e) déterminer une hauteur (480) et une position (478) d'une nouvelle ligne en cours sur la base de la hauteur et de la position de la ligne en cours et de la hauteur et de la position du caractère de ligne accepté, et,

(f) répéter les étapes (c) à (e) pour au moins un autre jeton.

**7.** Dispositif de traitement d'image programmable destiné à segmenter une surface numérisée en une région d'annotations symboliques, le dispositif comprenant un détecteur (54) relié à un processeur (56), le dispositif étant conçu pour :

(a) déterminer un point de départ de la région d'annotations symboliques,

(b) déterminer des jetons candidats à proximité dudit point de départ de la région d'annotations symboliques,

(c) déterminer un premier jeton (471) à la droite dudit point de départ,

(d) définir une distribution gaussienne en cours dudit premier jeton (471), dans laquelle la variance (474) de ladite distribution gaussienne en cours représente une hauteur moyenne en cours de ladite région d'annotations symboliques et la moyenne (472) représente une position verticale en cours de ladite région d'annotations symboliques, et

(e) pour tous les jetons candidats restants :

(e1) déterminer le jeton candidat de droite suivant (473),

(e2) définir une distribution gaussienne dudit jeton candidat suivant (473), comprenant un calcul d'une moyenne, et

lorsque ladite moyenne de ladite distribution gaussienne dudit jeton candidat suivant (473) est en dessous d'une variance de seuil de ladite moyenne de ladite distribution gaussienne en cours, accepter ledit jeton candidat suivant comme faisant partie de ladite région d'annotations symboliques et combiner ladite distribution gaussienne dudit jeton candidat suivant à ladite distribution gaussienne en cours afin de calculer une nouvelle distribution gaussienne en cours de ladite région d'annotations symboliques.

**Fig. 1**

```
┌─────────────────────────────┐
│                             │  100
│     Capture Image Tiles     │
│                             │
└─────────────────────────────┘
              │
              ▼
┌─────────────────────────────┐
│  Perform Center - Surround  │  102
│       On Raw Images         │
│                             │
└─────────────────────────────┘
              │
              ▼
┌─────────────────────────────┐
│  Find Corresponding Landmarks│  104
│      On Overlapping Tiles   │
│                             │
└─────────────────────────────┘
              │
              ▼
┌─────────────────────────────┐
│     Solve for Perspective   │  106
│     Distortion Correction   │
│                             │
└─────────────────────────────┘
              │
              ▼
┌─────────────────────────────┐
│     Perform  Perspective    │  108
│     Corrections On All Tiles │
│                             │
└─────────────────────────────┘
              │
              ▼
┌─────────────────────────────┐
│     Write Into Grey - Level │  110
│     Board Rendition Image   │
│                             │
└─────────────────────────────┘
              │
              ▼
┌─────────────────────────────┐
│  Threshold to Produce Binary│  112
│     Board Rendition Image   │
│                             │
└─────────────────────────────┘
```

*Fig. 2*

*158*

*159*

P: daily planet

F: /net/image/test. im

c: RB

**Fig. 3**

**A list**

— wake up

— have breakfast

— go to Frog's house

*Fig. 4*

14

**Fig. 5**

Thin Drawing — 200

↓

Detect Curve Junctions — 202

↓

Trace Curves Between Junctions — 204

↓

Detect Corners On Curves — 206

↓

Break Curves At All Corners — 208

*Fig. 6*

*Fig. 7*

**Fig. 8**

*378* Determine Initial Start Location

*380* Estimate Line Vertical Position and Vertical Extent Based on Initial Location

*382* Collect PRIMATIVE-CURVE-SEGMENT Candidate Tokens in Vicinity, to Right of Initial Location

*384* Sort Candidate Tokens from Left to Right

*386* All Candidate Tokens Compared? — Yes → *388* Accept "Questionable Tokens" Which Touch Accepted Tokens

No

*390* Compare Vertical Position, Vertical Extent of Candidate Token with Estimated Vertical Position, Vertical Extent

*392* Within Fisher Distance Threshold? — No → *394* Intermediate Fisher Distance? — No

Yes *398* Accept Token As Part of Line

Yes *396* Make "Questionable Token"

*399* Estimate New Vertical Position and Vertical Extent

Fig. 9